# EUROPEAN PATENT APPLICATION

(11) **EP 1 091 584 A2**
(43) Date of publication of application: **11.04.2001**
(21) Application number: 00402618.3
(22) Date of filing: 21.09.2000
(51) Int. Cl.: H04N 7/24

(54) **Multimedia search and browsing method using multimedia user profile**

(30) Priority: 22.09.1999 KR 9941189
(71) Applicant: LG ELECTRONICS INC., Seoul (KR)
(72) Inventor: Song, Jung Min, Seoul (KR); Lee, Jin Soo, Seoul (KR)
(74) Representative: Verdure, Stéphane

(57) **Abstract**

The present invention relates to a multimedia search and browsing method using a user profile information structure which is capable of displaying search items in order of user preference on the basis of item ordering criteria according to user preference by using search item ordering criteria information and a user profile including user preference information about the item ordering criteria, and browsing a searched object after searching the search object indicated by the search items displayed according to the user preference. The present invention can be adapted to multimedia service systems such as a digital VTR (Video Tape Recorder), a VOD (Video On Demand), an AOD (Audio On Demand), the internet.

In addition, the user profile for searching and browsing the multimedia according to the present invention gets search and browsing of the multimedia performed easier in accordance with user's liking.

## Description

### BACKGROUND OF THE INVENTION

### 1. Field of the Invention

The present invention relates to a multimedia search and browsing method using a multimedia user profile information structure, in particular to the multimedia search and browsing method using the multimedia user profile information structure which is capable of displaying search items in accordance with user preference, and searching and browsing a pertinent multimedia by using the search items displayed according to the user preference.

### 2. Description of the Prior Art

Conventionally a user can watch television by receiving a video and an audio signal from a broadcasting station, and can watch a movie in a theater.

However, the user may want to watch a certain segment of a drama or movie, accordingly in order to make the user select a certain segment of the drama or movie, related technologies have been presented according to development of various video mediums.

For example, the user can choose a movie or a drama selectively by connecting to a video provider through a network such as a LAN (Local Area Network).

In addition, the user can selectively reproduce a certain moving picture segment in the selected drama or movie which shows a character, an accident, a place, or an article the user wants to watch.

In addition, the user can automatically summarily reproduce important parts of video contents such as a news program, a sports program, a movie without reproducing the whole, and can reproduce custom-tailored moving picture segment by setting key frames representing each moving picture segment and displaying the key frames.

There are certain technologies to perform above-mentioned function.

For example, there is a technology which is capable of selecting an object in lists, and reproducing a certain segment showing the selected object when the user wants to watch by dividing various video contents into the lists including groups such as a pattern group, an index group, a medium group, a segment group, an object group, a representation group and displaying information about the selected object such as a character and an article (object name, position on a screen, numerical value of an object on the video contents ect.) in the object group and representation group.

There is the other technology which is capable of providing lists about various additional information of video contents which can be made before, during, after production of the video contents.

For example, the additional information lists can provide information related to positions where characters and articles show in the video contents, and it can produce the pertinent scene when the user selects an object.

In addition, when the selected object is an article, it displays information about the article (manufacturer, price ect.), and connects to the manufacturer/sales agency of the article.

There is another technology which is capable of providing a partial map having information about each part of video contents.

In other words, the partial map displays the information about the each part of the video contents (items : violence, suggestiveness, importance, characters, positions, difficulty ect.), the user can reproduce the wanted part among the video contents by registering user preference about the items of the video partial map, and can restrict transmission of a certain content to unidentified users.

There is another technology which is capable of illustrating a time connection graph of moving picture shots.

However, it is difficult to understand a story of the time connection graph of the moving picture shots, because it is as same as watching a few representative scenes.

The above-described conventional moving picture search technologies just display lists informing various information about the objects showing in the drama or movie, and perform the function according to selection of the user.

In addition, it is possible to search and browse the multimedia efficiently because the user can get the part of the multimedia related to the selected item.

However, search and browsing items have to be increased in accordance with increase of the number of multimedia. Accordingly technologies for displaying selectively search items in accordance with user liking are required, and are developed.

For example, there is an automatic setting method which is capable of setting a system automatically when the user approaches to the system by storing a television channel, a music genre, volume of the music preferred by the user and using the stored information.

There is the other method which is capable of searching a program in accordance with user liking by comparing a program character table storing information such as characters, program genre, category of sports, sports team ect. with a user preference table.

There is another method which is capable of searching goods corresponding to a request of the user by comparing a stored character (size, price, capability ect.) of the goods with the character requested by the user.

There is another method which is capable of setting automatically parameters of a video display unit such as a volume, brightness by learning preference of the user.

There is another method which is capable of displaying e-mails in accordance with user liking whenever the user checks the e-mails.

There is another method which is capable of providing a custom-tailored electronic newspaper by learning preference of the user.

The above-described multimedia search and browsing systems store preference about search items to be searched/browsed, and search/browse the multimedia in accordance with the preference.

In the above- systems a searcher and a browser display search items (character, place, incident, article, key frame ect.) to the user, there are many methods to display the search items to the user.

For example, the search items can be displayed according to various criteria such as alphabetical order, number of appearance, priority, occurrence order ect..

The each user can have different preference about the criteria, but the conventional technologies did not consider the preference difference in the criteria.

### SUMMARY OF THE INVENTION

The object of the present invention is to provide a multimedia search and browsing method using a multimedia user profile information structure which is capable of displaying search items in accordance with preference of a user and searching and browsing a pertinent multimedia by using the displayed search items in accordance with the preference.

In order to achieve above-mentioned object, the multimedia user profile information structure for indexing and browsing a multimedia object comprises search item ordering criteria information for searching and browsing the multimedia object, and user preference information on the search item ordering criteria for displaying the search item to be browed in an user preferred arrangement.

In order to achieve above-mentioned object, a search item preference information structure for searching and browsing a multimedia comprises a search object which is the multimedia data stream, a search item which is criterion of indexing, connection information which connects the each search item to the search object, ordering criteria information for informing ordering criteria of the each search item, a multimedia object including ordering information according to the each ordering criterion, item categories for informing items which can be criteria of the search and browsing, a user profile including preference value informing preference about the ordering information of the multimedia object on the each item category, and displays the each search item ordering in accordance with the each user's liking.

In order to achieve above-mentioned object, a multimedia search and browsing method using multimedia user profile information for indexing and browsing a multimedia object comprises a display process for displaying search items in order of user preference on the basis of the item ordering criteria according to the user preference by using the search item ordering criteria information and user profile including the user preference information about the item ordering criteria, and a browsing process for browsing a searched object after searching the search object indicated by the search items displayed according to the user preference.

In order to achieve above-mentioned object, a multimedia search and browsing method using the user profile information structure for indexing and browsing a multimedia object comprises a search object which is the multimedia data stream, a search item which is criterion of indexing, connection information which connects the each search item to the search object, ordering criteria information for informing ordering criteria of the each search item, a multimedia object including ordering information in accordance with the each ordering criterion, item categories for informing items which can be criteria of the search and browsing, a user profile including preference value informing preference about the ordering information of the multimedia object on the each item category, a selecting process for selecting the ordering criteria information in order of the preference value of the user profile on the each search item in search and browsing of the multimedia, a displaying process for displaying the multimedia items by using the ordering criteria information of the user profile, and a browsing process for browsing the search object after searching the search object indicated by the search items displayed according to the user preference.

### BRIEF DESCRIPTION OF THE DRAWINGS

FIG.1 illustrates a multimedia data structure according to the embodiment of the present invention.

FIG.2 illustrates the other embodiment of the multimedia data structure in FIG.1.

FIG.3A-3D illustrate the other embodiment of the multimedia data structure in FIG.1.

FIG.4 illustrates a structure of search item ordering criteria preference information according to the present invention.

FIG.5 illustrates a search item preference information structure according to the present invention.

FIG.6 illustrates the embodiment of the search item preference according to the present invention.

FIG.7 illustrates a video browser using the user preference in FIG.6.

FIG.8A-8B illustrate ordering information of a multimedia object in accordance with the ordering criteria information.

FIG. 9 illustrates a structure of search item ordering criteria preference information by using the multimedia object in FIG.8.

### DETAILED DESCRIPTION OF THE PREFERRED EMBODIMENT

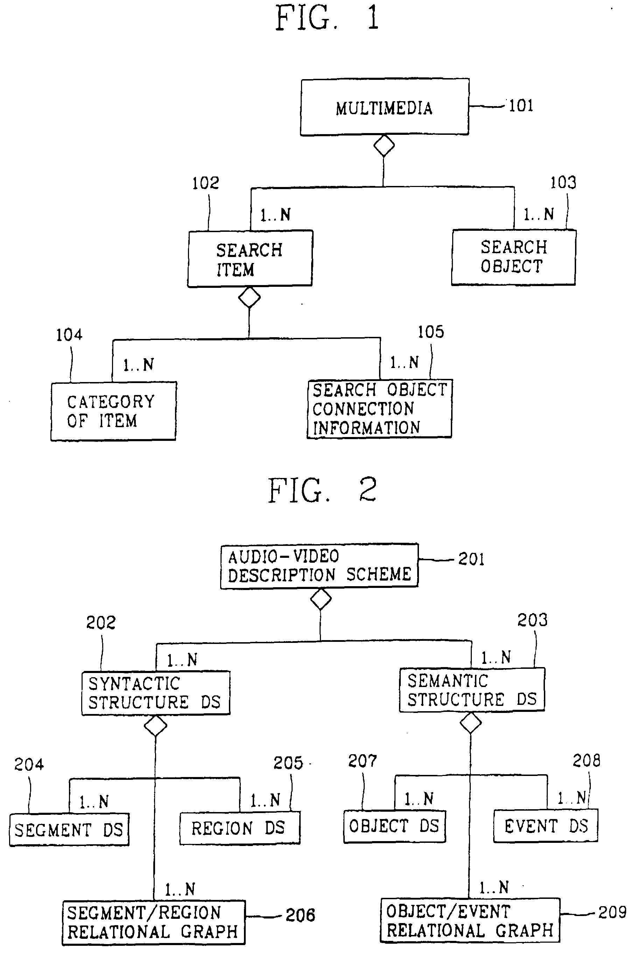

FIG.1 illustrates a multimedia data structure according to the embodiment of the present invention.

As depicted in FIG.1, a multimedia object 101 comprises a search item 102 for searching and browsing, and a search object 103 for being searched and browsed.

The search item 102 comprises category of item 104 informing the categories of the item, and a search object connection. information 105 for connecting to the search object.

When the multimedia object 101 is moving picture, items comprised in the search item 102 can be a character or an incident.

The search object 103 can be a segment showing the character or incident, and the search object connection information 105 can be information for connecting a pertinent character and incident to a pertinent segment.

FIG.2 illustrates the other embodiment of the multimedia data structure in FIG.1.

First, an audio-video description scheme 201 comprises a syntactic DS (Description Scheme) 202 for describing a segment showing the multimedia object, and a semantic DS (Description Scheme) 203 for describing meaningful information.

The syntactic DS (Description Scheme) 202 comprises a segment DS (Description Scheme) 204 as a real moving picture segment, a region DS (Description Scheme) 205, and a segment/region relation graph 206.

The semantic DS (Description Scheme) 203 comprises an object DS (Description Scheme) 207 for describing object information such as a character or a place, an event DS (Description Scheme) 208 describing incidents, and an object/event relation graph 209 for describing relation between the characters, places or incidents.

Herein, the search item 102 comprises the segment DS (Description Scheme) 204, region DS (Description Scheme) 205, segment/region relation graph 206, object DS (Description Scheme) 207, event DS (description Scheme) 208, object/event relation graph 209, and the category of item 104 divides the above search items.

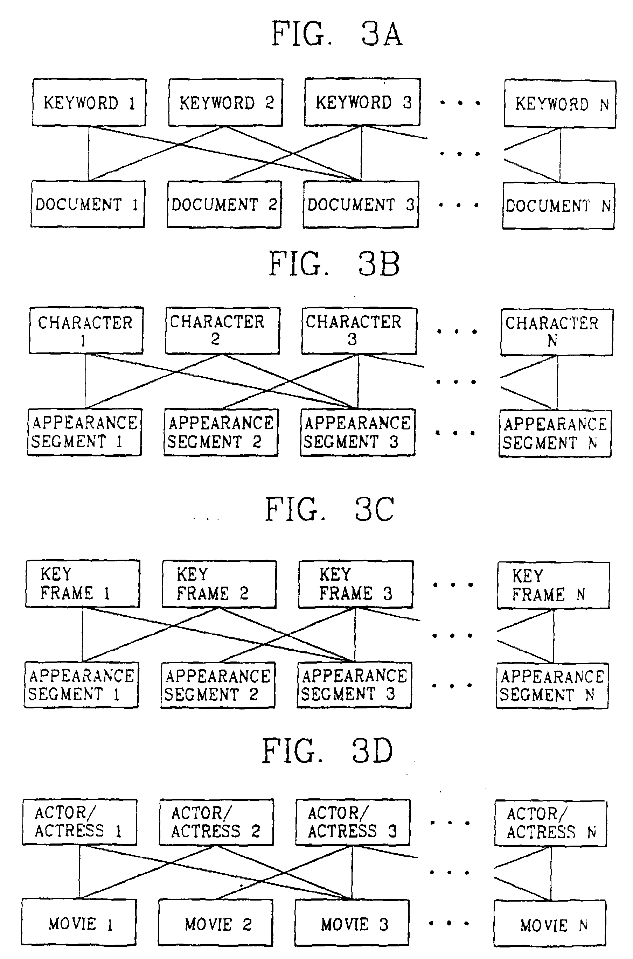

FIG.3A-3D illustrate the other embodiment of the multimedia data structure in FIG.1.

In other words, FIG.3A-3D illustrate examples of the category of item 104 and search object 103 of the multimedia object 101 in FIG.1. FIG.3A-3D will be described in detail with reference to FIG.1.

First, the category of item 104 can be all search items such as a character, key frame, place, actor/actress, article, keyword, melody ect..

The search object 103 can be a moving picture segment showing a character, moving picture segment represented by a key frame, a movie or a drama showing a certain actor/actress, a document comprising a certain key word, or an audio clip having a melody similar to a certain melody ect..

FIG.3A illustrates an ordinary text document item, the text document is a key word in the category of item 104, and the search item 102 can be key word 1, key word 2, key word 3,..., key word N.

The search object 103 can be document 1, document 2, document 3, ..., document N.

FIG.3 illustrates moving picture item categories, the item category is characters, the search item is character 1, character 2, character 3, ..., character N.

In addition the search object 103 can be appearance segment N showing a pertinent character.

FIG.3C illustrates the other example of moving picture item categories, the category of item 104 is key frame, the search item 102 can be key frame 1 key frame 2, key frame 3, ... , key frame N.

The search object 103 can be appearance segment 1, appearance segment 2, appearance segment 3, ... , appearance segment N.

Fig.3D illustrates the other example of moving picture item categories, the category of item 104 is actor name, the search item 102 can be actor 1, actor 2, actor 3, ... , actor N.

The search object 103 can be movie 1, movie 2, movie 3, ... , movie N showing the pertinent actor.

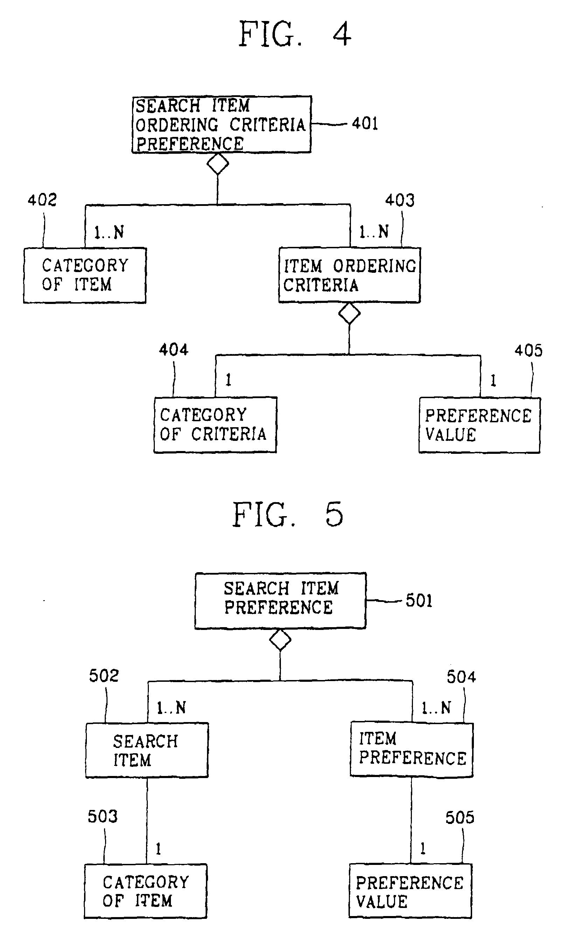

FIG.4 illustrates a structure of search item ordering criteria preference information according to the present invention.

In other words, it describes a user profile information structure comprising preference of the search item ordering criteria informing a user preference about the multimedia object structure such as FIG.1. or FIG.3, it will now be described in detail.

First, a search item ordering criteria preference 401 comprises a category of search item 402, and an item ordering criteria 403 determining the ordering of the search items according to the category of item.

The item ordering criteria 403 comprises a category of criteria 404, and a preference value 405 about each category of criteria.

Accordingly, the multimedia object in FIG.1. or FIG.3 can be searched by using the user profile information in FIG.4 informing the search item ordering criteria.

In addition, in browsing of the multimedia object, the search item can be displayed by using the search item ordering criteria in accordance with the user preference.

Herein, when the user searches and browses a certain object, a searcher displays the search items to the user. The search items ordering is performed in accordance with the item ordering criteria 403 of the user profile information such as depicted in FIG.4.

For example, when a character of moving picture is searched and browsed, the item ordering criteria 403 can be number of appearance of the character or age of the character, the search/browsing is performed by using a key frame of the moving picture, the item ordering criteria 403 can be time ordering of the moving picture represented by the key frame, brightness of the key frame image, or color of the key frame image.

In addition, the preference value 405 of the item ordering criteria 403 is information stored by the user.

When the user selects preferred criteria, stores it among the item ordering criteria 403, and uses the searcher for searching and browsing, the searcher displays the search items on the basis of the preference value of the user about the item ordering criteria.

FIG.5 illustrates a search item preference information structure according to the present invention.

As depicted in Fig.5, a search item preference 501 comprises a search item 502, a category of item 503, a item preference 504, and a preference value 505.

The category of item 503 can be characters, places, and key frames as described above.

The search item 502 can be character N when the category of item is character.

The item preference 504 describes the user preference about a certain search item among the category of item such as the character, place, key frame ect. as the preference value 505.

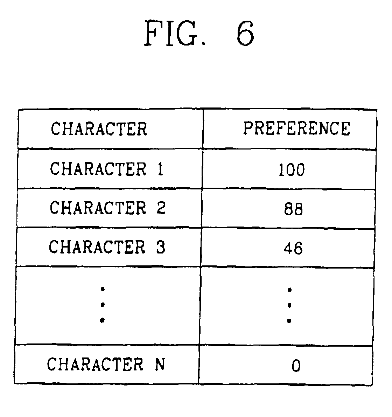

FIG.6 illustrates the embodiment of the search item preference according to the present invention.

As depicted in FIG.6, when a category of item is character, the user preference is described as a certain value on the each search item of the each character (character N).

For example, the character 1 can be preference '100', character 3 can be preference '46', the preference value is displayed on the each search item (character).

In other words, the multimedia searcher and browser can display the characters as character 1, character 2, character 3, ... , character N from the user profile having the preference information.

In addition, the user can easily search/browse the segments showing the pertinent character by watching the search item displayed in order of the preference of the user.

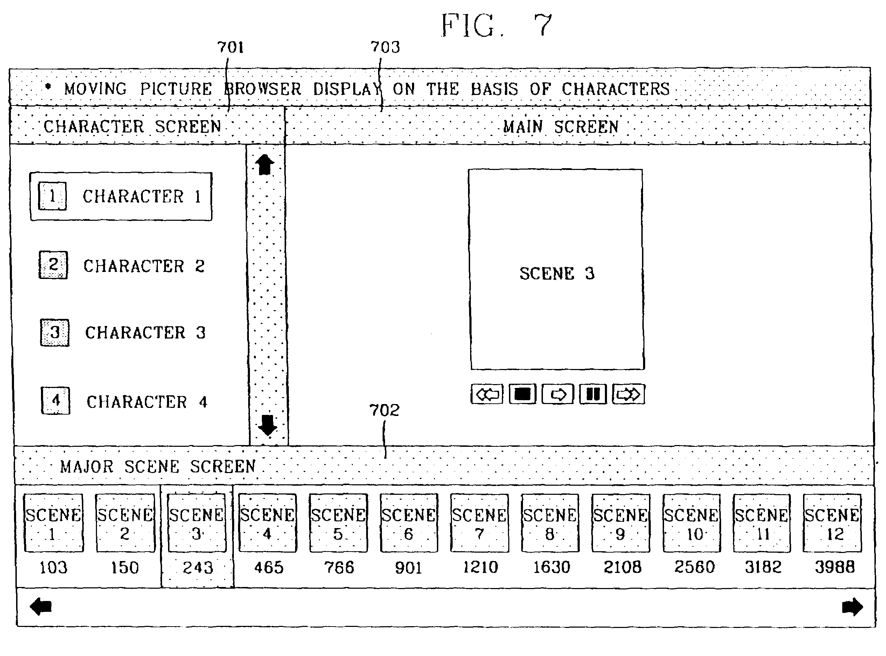

FIG.7 illustrates a video browser using the user preference in FIG.6.

In other words, it depicts a moving picture browser displayed on the basis of characters.

As depicted in FIG.7, the search item is displayed on a character screen 701 from character 1 to character N (N=4) in order of the preference of the user.

Herein, when the character 1 is selected by the user, the key frames corresponding to the moving picture (search object) showing the character 1 are displayed on a major scene screen 702. Herein, a main screen 703 reproduces a pertinent moving picture segment when the user selects a scene 3.

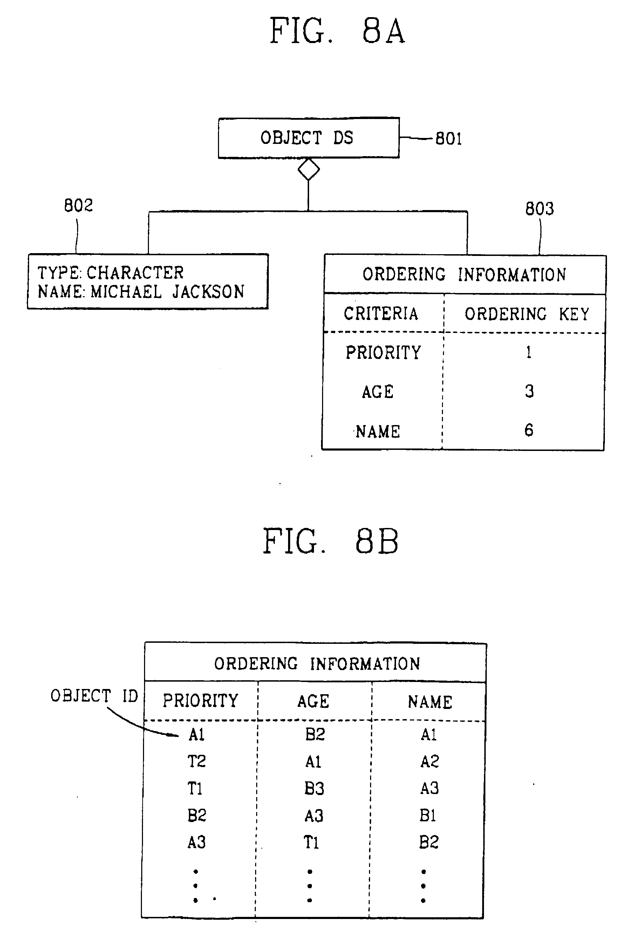

FIG.8A-8B illustrate ordering information of a multimedia object in accordance with the ordering criteria information.

FIG. 8A illustrates an object DS comprising object information 802 and ordering information 803.

FIG 8B illustrates the ordering information on the basis of three ordering criteria information (priority, age, name).

In other words, when the object DS (Description Scheme) 801 is a character in the multimedia structure described in FIG.2, the object DS (Description Scheme) 801 comprises the object meaning information 802 displaying the object type and object name, and the ordering information 803 displaying the ordering criteria information and ordering Key.

Herein, the object DS (Description Scheme) displays the ordering information in the basis of the three ordering criteria information such as a priority, age, name.

As depicted in FIG.8B, the characters A1, T2, T1, B2,,, are displayed in accordance with the priority, the character B2, A1, B2,,,, are displayed in accordance with the age, and the character A1, A2, A3, B1,,,, are displayed in accordance with the name.

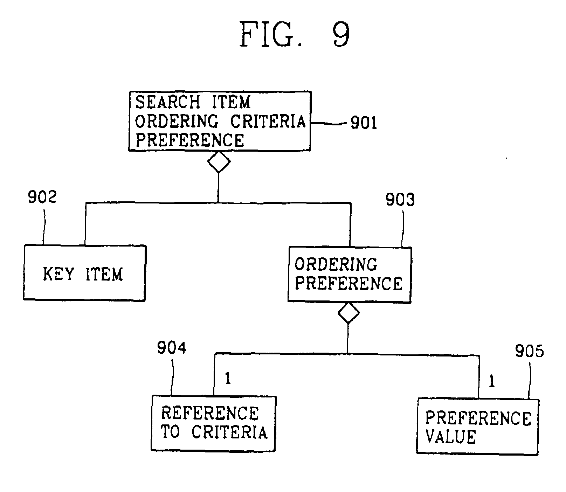

FIG. 9 illustrates a structure of search item ordering criteria preference information by using the multimedia object in FIG.8.

As depicted in FIG.9, a search item ordering criteria preference 901 comprises a key item 902, and an ordering Preference 903.

The ordering preference 903 comprises a reference to criteria 904, and a preference value 905.

The reference to criteria 904 indicates the ordering criteria information displayed on the multimedia object, and the preference value 905 means the preference about the referenced ordering criteria.

Accordingly, a search item ordering based on the user preference and the multimedia search and browsing using the search item ordering can be possible by referencing the user profile information in FIG.9 from the multimedia object in FIG.8.

In other words, the reference to criteria 904 based on the ordering criteria preference value 905 displays search items of the multimedia object on the basis of the ordering criteria information of the multimedia object data structure in FIG.8 by using the search item ordering criteria preference 901 described in the user profile.

After that, the search and browsing about the pertinent multimedia object are performed from the displayed information.

As described above, when the search items related to the multimedia are displayed, the present invention can efficiently perform search and browsing of the multimedia object by displaying the search item after selecting a criterion among search item ordering criteria in accordance with the user preference.

In addition, the present invention can be adapted in a multimedia service system such as a VTR (video Tape Recorder), a VOD (Video On Demand), an AOD (Audio On Demand), the internet ect..

In addition, the present invention is capable of searching/browsing easily the object according to preference of the user.

## Claims

1. A multimedia user profile information structure for indexing and browsing a multimedia object, comprising :
search item ordering criteria information for searching and browsing the multimedia object; and
user preference information on the search item ordering criteria for displaying the search item to be browed in an user preferred arrangement.

2. The multimedia user profile information structure according to claim 1, wherein the user profile comprises item categories which can be criteria of search and browsing in order to get each search and browsing item ordering displayed according to each user's liking.

3. The multimedia user profile information structure according to claim 2, wherein the user profile further comprises item ordering criteria in order to determine ordering of search items on the each item category.

4. The multimedia user profile information structure according to claim 3, wherein the item ordering criteria comprise criteria categories informing the categories of the criteria.

5. The multimedia user profile information structure according to claim 4, wherein the item ordering criteria further comprise preference information informing preference about the pertinent criterion category.

6. The multimedia user profile information structure according to claim 4, wherein the criteria categories inform the preference of the user file about the pertinent item, and the search items are displayed in accordance with the preference of the user profile.

7. A multimedia search and browsing method using multimedia user profile information for indexing and browsing a multimedia object, comprising :
displaying search items in order of user preference on the basis of the item ordering criteria according to the user preference by using the search item ordering criteria information and user profile including the user preference information about the item ordering criteria ; and
browsing a searched object after searching the search object indicated by the search items displayed according to the user preference.

8. A search item preference information structure for searching and browsing a multimedia, comprising :
a search object which is the multimedia data stream ;
a search item which is criterion of indexing ;
connection information which connects the each search item to the search object ;
ordering criteria information for informing ordering criteria of the each search item ; and
a multimedia object including ordering information according to the each ordering criterion.

9. The search item preference information structure for searching and browsing the multimedia according to claim 8, wherein the search item preference information structure for searching and browsing the multimedia further comprises :
item categories for informing items which can be criteria of the search and browsing ; and
a user profile including preference value informing preference about the ordering information of the multimedia object on the each item category.

10. The search item preference information structure for searching and browsing the multimedia according to claim 8 or 9, wherein the search item preference information structure for searching and browsing the multimedia makes the each search item ordering display according to each user's liking.

11. A multimedia search and browsing method using a user profile information structure for indexing and browsing a multimedia object, comprising :
a search object which is the multimedia data stream ;
a search item which is criterion of indexing ;
connection information which connects the each search item to the search object ;
ordering criteria information for informing ordering criteria of the each search item ;
a multimedia object including ordering information in accordance with the each ordering criterion ;
item categories for informing items which can be criteria of the search and browsing ;
a user profile including preference value informing preference about the ordering information of the multimedia object on the each item category ;
selecting the ordering criteria information in order of the preference value of the user profile on the each search item in search and browsing of the multimedia ;
displaying the multimedia items by using the ordering criteria information of the user profile ; and
browsing the search object after searching the search object indicated by the search items displayed according to the user preference.
